# EUROPEAN PATENT SPECIFICATION

(11) **EP 2 357 480 B1**
(45) Date of publication and mention of the grant of the patent: **30.10.2019**
(21) Application number: 09831738.1
(22) Date of filing: 23.03.2009
(51) Int. Cl.: G01N 35/04, G01N 35/02

(54) **RACK TRAY AND RACK TRANSPORT SYSTEM**
TABLETT FÜR HALTER UND HALTERTRANSPORTSYSTEM
PLATEAU À PORTOIRS ET SYSTÈME DE TRANSPORT DE PORTOIRS

(30) Priority: 11.12.2008 JP 2008315939
(43) Date of publication of application: 17.08.2011
(73) Proprietor: Beckman Coulter, Inc., Brea, CA 92821 (US)
(72) Inventor: KAIGA, Masahiro, Shizuoka 4110931 (JP)
(74) Representative: Müller-Boré & Partner Patentanwälte PartG mbB
(86) International application number: PCT/JP2009/055608
(87) International publication number: WO 2010/067632

(56) References cited:
- JP-A- 9 033 540
- JP-A- 10 123 146
- JP-A- H10 123 146
- JP-A- 2000 162 216
- JP-A- 2000 162 216
- JP-A- 2001 272 408
- JP-A- 2001 272 408

## Description

### TECHNICAL FIELD

The present invention relates to a rack tray that holds a plurality of racks and is placed on an automatic analyzing apparatus, a rack, and a rack transport system using the rack tray.

### BACKGROUND ART

In the past, when a dispenser or an automatic analyzing apparatus supplies or collects a specimen, a rack tray that can arrange and hold a plurality of racks supporting a plurality of specimen containers is used (for example, see Patent References 1 and 2).

Patent Reference 1: Japanese Laid-Open Publication No. 10-123146
Patent Reference 2: Japanese Laid-Open Publication No. 2002-90378
Patent Reference 3: Japanese Laid-Open Publication No. 2001-272408
Patent Reference 4: Japanese Laid-Open Publication No. 2000-162216

### DISCLOSURE OF THE INVENTION

### PROBLEMS TO BE SOLVED BY THE INVENTION

However, in a rack tray disclosed in Patent Reference 1, a T-shaped projection is formed on an upper surface of a rack tray and fitted in a T-shaped trench of a lower section of the rack to obtain a fall prevention mechanism of the rack. However, a rack slips on the rack tray and is brought into contact with an end of the rack tray to probably cause a specimen to fly in all directions for example when the rack tray is tilted by transport. Since a rack is fitted on the T-shaped projection of the tray, the rack is not easily set, and a long time and a lot of trouble are required to arrange a plurality of racks. Furthermore, since a rack cannot be taken out of only the endmost rack of the plurality of arranged racks, some middle rack cannot be taken out without a problem.

Since a rack tray disclosed in Patent Document 2 transports a rack along a guide rail and attaches/detaches the rack by using a narrow oblique section arranged in the middle of the guide rail, racks cannot be set only one by one. Since racks cannot be easily set, a long time and a lot of trouble are required to arrange a plurality of racks to make it impossible to easily set the racks at desired positions.

JP 2001-272408 discloses providing a mechanism for reliably preventing the fall and inverse setting of sample racks, as well as easing setting and removing of the sample racks. This is achieved by using differently shaped cutouts 6b and 6c provided at opposing parts of a sample rack 6. A first engagement member 20 configured to rock back and forth is engaged with the cutout 6c, by supporting the first engagement member 20 on a sampler part 7 using a hinge 19 and a spring 21. At the same time, a second engagement member 18 formed as part of the sampler part 7 is engaged with the cutout 6b. The two engagement members prevent the sample rack from falling.

JP 2000-162216 discloses preventing wear of a tray table, when a rack tray is set on the tray table of a partial injection device. This is achieved by providing a pair of rollers 30, 32 at an end part of a rack tray 14, such that when the rack tray 14 is slid on a tray table 12 at a slight incline, the wear of the tray table 12 can be prevented by the rollers 30, 32 rolling the rack tray 14 into place, as opposed to the rack tray sliding into place.

The present invention has been made in consideration of the above description and has as its object to provide a rack tray that, when a plurality of racks supporting a plurality of specimen containers are arranged, can safely transport the racks and set the racks in an apparatus, a rack, and a rack transport system.

### MEANS FOR SOLVING THE PROBLEM

In order to solve the abovementioned problem and to achieve the object, a rack tray according to the present invention is a rack tray configured to hold a plurality of racks supporting a plurality of specimen containers comprising: a tray base configured to store the plurality of racks and having a substrate which is configured to support the plurality of racks; a rack dropout-preventing mechanism configured to prevent the racks from being dropped out when the racks are stored on the tray base; the rack dropout-preventing mechanism comprising a dropout-preventing lever, which is formed in a staircase pattern horizontally extending under the substrate and which is bent from a hole formed near the opening and vertically rises up to prevent the rack from being dropped out; the dropout-preventing lever further being supported by the substrate of the tray base with a shaft, wherein a spring is set between the bottom surface of the substrate and the dropout-preventing lever configured to upwardly bias an end section of the dropout-preventing lever rising up from the hole; the rack tray characterized by further comprising: a rack movement-preventing mechanism comprising a handle section configured to be moved on the tray base to press the plurality of racks arranged on the tray base to a side of the rack dropout-preventing mechanism to prevent movement of the plurality of racks; and a guide rail having a plurality of engagement sections at positions corresponding to the number of racks held, the guide rail being integrated with the tray base, wherein a projection serving as a locking section held by the rack movement-preventing mechanism is configured to be engaged with an engagement section to lock the movement of the racks; each engagement section being a projection formed on the guide rail, the projection comprising first and second slopes, the first slope facing the rack tray opening, the second slope being on the opposite side of the first slope, wherein an inclination of the first slope is higher than an inclination of the second slope; the handle section including a partition and a partition, a push spring arranged between the partition and the partition to bias the partition downward, and the projection being formed at a distal end of the partition; the handle section configured to push up the projection by gripping the partition and the partition from the upper and lower sides and pushing the partition towards the partition to cancel the engagement of the projection with an engagement section, and allowing the rack movement-preventing mechanism to be moved; the rack movement-preventing mechanism further including a shaft supported by the handle section and extending to a lower section of the guide rail, the guide rail including a trench section through which the shaft passes with movement of the rack movement-preventing mechanism.

The rack tray according to the present invention, in the above invention, is characterized by comprising grip members on two opposite sides parallel to an arrangement direction of the racks stored on the tray base.

The rack tray according to the present invention is further characterized in that the tray base includes guide walls on three sides except for the opening in the rack traveling direction, and the guide wall of any one of two sides parallel to the traveling direction has a fitting section formed on a side surface thereof for fitting with a projection section of the racks.

Furthermore, a rack tray according to the present invention is a rack tray configured to hold a plurality of racks supporting a plurality of specimen containers, comprising: a tray base configured to store the plurality of racks and having a substrate which is configured to support the plurality of racks; a rack dropout-preventing mechanism configured to prevent the racks from being dropped out when the racks are stored on the tray base; the rack dropout-preventing mechanism comprising a dropout-preventing lever, which is formed in a staircase pattern horizontally extending under the substrate and which is bent from a hole formed near the opening and vertically rises up to prevent the rack from being dropped out; the dropout-preventing lever further being supported by the substrate of the tray base with a shaft, wherein a spring is set between the bottom surface of the substrate and the dropout-preventing lever configured to upwardly bias an end section of the dropout-preventing lever rising up from the hole; the rack tray characterized by further comprising: a rack movement-preventing mechanism comprising a handle section configured to be moved on the tray base to press the plurality of racks arranged on the tray base to a side of the rack dropout-preventing mechanism to prevent movement of the plurality of racks; and the handle section including a partition and a partition; wherein the partition includes a projection at the distal end thereof such that the partition is supported by a tray base and wherein the projection is engaged with an engagement section formed on the tray base;
a guide rail having a plurality of engagement sections at positions corresponding to the number of racks held, wherein the projection is configured to be engaged with an engagement section to lock the movement of the rack; each engagement section being a projection formed on the guide rail, the projection comprising first and second slopes, the first slope facing the rack tray opening, the second slope being on the opposite side of the projection from the first slope, wherein an inclination of the first slope is higher than an inclination of the second slope; the guide rail being formed independently of the tray base, jointed to the tray base by joint sections at the edges of two axisymmetric joint members, each joint member rotatable around a shaft arranged along their respective axis of symmetry, each shaft supported on the tray base and serving as a joint section between the respective joint member and the tray base, and a spring configured to bias to push up the guide rail, the spring being arranged between the joint member and the guide rail, the two axisymmetric joint members configured to be pushed up at their edges opposite the edges bearing the joint sections to allow to cancel the engagement of the projection with the engagement section, and the rack movement-preventing mechanism to be moved.

The rack tray according to the present invention, in the above invention, is characterized by the grip member being arranged on the opening side of the rack in the traveling direction is arranged such that the holding section is offset from an arrangement position of the grip member.

Furthermore, a rack transport system according to the present invention is a rack transport system comprising: a rack tray set section configured for a rack tray to be placed thereon, the rack tray being a rack tray according to any one of claims 1 to 5, configured to hold the plurality of racks supporting a plurality of specimen containers; a rack collecting section configured for an empty rack tray to be placed thereon, the empty rack tray being a rack tray according to any one of claims 1 to 5 configured to collect a rack supporting a plurality of specimen containers that are aspirated; and a transport mechanism configured to transport the rack from the rack tray set section to an aspirating mechanism, aspirate specimens from all the specimen containers, and thereafter transport the rack to the rack collecting section; the rack collecting section including a lock canceling mechanism of a rack movement-preventing mechanism of the rack tray; the lock canceling mechanism being a push-up member configured to push up a shaft of the rack tray.

The rack transport system according to the present invention, in the above invention, is characterized by the lock canceling mechanism being a push-up member configured to push up a joint member of the rack tray such that the guide rail of the rack tray is pushed down

The rack transport system according to the present invention, in the above invention, is characterized by the rack tray set section and the rack collecting section including a lock canceling mechanism of a rack dropout-preventing mechanism of the rack tray.

### EFFECT OF THE INVENTION

According to the present invention, an engagement section is formed on a guide rail, and a locking section of a rack movement-preventing mechanism is engaged with the engagement section to lock the movement of a rack, thereby achieving the effect that transport of a rack tray on which a plurality of racks are arranged and setting of the rack tray in an apparatus can be safely performed.

### BRIEF DESCRIPTION OF THE DRAWINGS

FIG. **1** is a pattern diagram showing a main part configuration of an automatic analyzing apparatus using a rack tray according to Embodiment 1.
FIG. **2** is a perspective view of a rack tray according to Embodiment 1.
FIG. **3** is a perspective view of a rack tray that stores racks holding specimen containers.
FIG. **4** is a sectional view of the rack tray shown in FIG. **3** along an A - A line.
FIG. **5-1** is an operational diagram of a rack movement-preventing mechanism according to Embodiment 1.
FIG. **5-2** is an operational diagram of a rack movement-preventing mechanism according to Embodiment 1.
FIG. **6** is a cross-sectional view of an engagement section including the rack movement-preventing mechanism and a guide rail according to Embodiment 1.
FIG. **7** is a perspective view of a rack collecting section according to Embodiment 1.
FIG. **8-1** is an operational diagram of lock cancellation of the rack movement-preventing mechanism according to Embodiment 1.
FIG. **8-2** is an operational diagram of lock cancellation of the rack movement-preventing mechanism according to Embodiment 1.
FIG. **9** is a sectional view of the rack tray shown in FIG. **3** along a B - B line.
FIG. **10** is a perspective view of a rack tray set section according to Embodiment 1.
FIG. **11-1** is an operational diagram of lock cancellation of a rack dropout-preventing mechanism according to Embodiment 1.
FIG. **11-2** is an operational diagram of lock cancellation of the rack dropout-preventing mechanism according to Embodiment 1.
FIG. **12-1** is a front view showing a modification of a rack tray according to Embodiment 1.
FIG. **12-2** is a pattern diagram showing a main part configuration of an automatic analyzing apparatus using a rack tray according to a modification of Embodiment 1.
FIG. **13** is a sectional view showing another modification of the rack tray according to Embodiment 1 together with a rack and a rack collecting section.
FIG. **14** is a cross-sectional view of an engagement section including a rack movement-preventing mechanism and a guide rail according to Embodiment 2.
FIG. **15-1** is a sectional view showing a rack tray according to Embodiment 2 together with a rack and a rack collecting section.
FIG. **15-2** is a sectional view showing a rack tray according to Embodiment 2 together with a rack and a rack collecting section.

**1, 1A** Automatic analyzing apparatus
**2, 3** First and second reagent storage
**2a, 3a** Reagent container
**4** Reaction table
**4a** Holding section
**4b** Optical path
**5** Reaction container
**6, 7** First and second reagent dispenser
**6a, 7a** Arm
**6b, 7b** Probe
**8, 8'** Rack transport system
**8a** Push-out lever
**8A** Rack tray set section
**8B, 8B'** Transport mechanism
**8C** Rack collecting section
**9** Rack
**9a** Specimen container
**10, 10A, 10B, 10C** Rack tray
**10a** Tray base
**10b** Rack dropout-preventing mechanism
**10c, 10c', 10c"** Rack movement-preventing mechanism
**10d** Grip member
**10e, 10e'** Guide rail
**10f** Guide wall
**10g** Substrate
**10h, 61** Engagement section
**10i, 10j** Trench
**10k, 10l** Partition
**10m, 10r, 33** Spring
**10n, 10q, 32** Shaft
**10o** E ring
**10p, 60** Projection
**10s** Dropout-preventing lever
**10t, 10t', 10u** Push-up section
**10w** Hole
**11** Analytical optical system
**12** Cleaning mechanism
**13, 14** First and second stirring device
**15** Control section
**16** Input section
**17** Analyzing section
**18** Memory section
**19** Output section
**20** Specimen dispenser
**30** Joint member
**31** Joint section
**40** Measuring mechanism
**50** Control mechanism

### BEST MODE FOR CARRYING OUT THE INVENTION

With reference to the accompanying drawings, a rack tray, a rack, and a rack transport system according to embodiments of the present invention will be described below by using, as an example, an automatic analyzing apparatus that analyzes a liquid specimen such as blood as a sample. Drawings referred to in the following explanation are typical. When the same object is shown in different drawings, dimensions, scales and the like of the object may be different from each other. The invention is not limited to the embodiments. In the drawings, the same parts are denoted by the same reference numerals.

### (Embodiment 1)

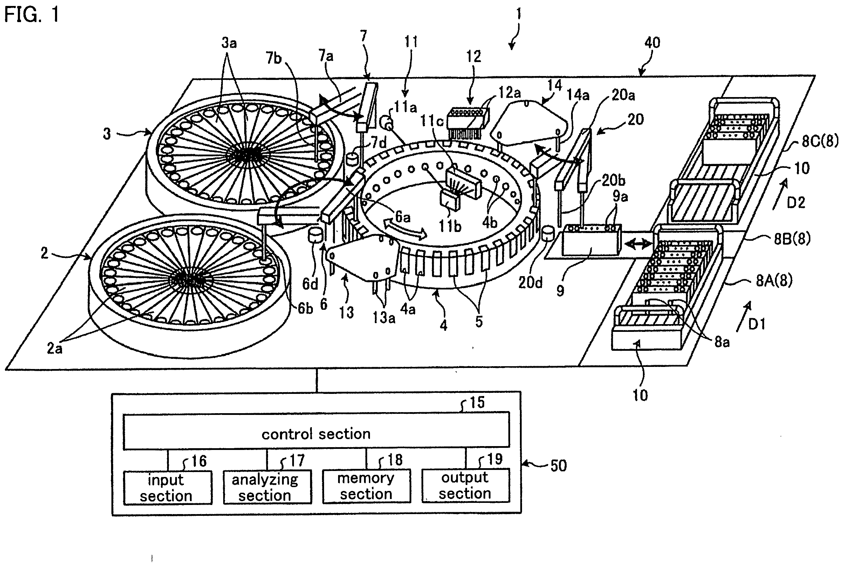

FIG. **1** is a pattern diagram showing a configuration of an automatic analyzing apparatus **1** using a rack tray **10** and a rack transport system **8** according to Embodiment 1. As shown in FIG. **1****,** the automatic analyzing apparatus **1** includes a measuring mechanism **40** that dispenses a specimen to be analyzed and a reagent into reaction containers **5,** respectively, and optically measures reactions occurring in the reaction containers **5** into which the specimen and the reagent are dispersed, and a control mechanism **50** that controls the entire automatic analyzing apparatus **1** including the measuring mechanism **40** and analyzes measurement results in the measuring mechanism **40.** The automatic analyzing apparatus **1** automatically performs biochemical, immunological, or genetic analysis of a plurality of specimens by the combination of the two mechanisms.

The measuring mechanism **40** includes a first reagent storage **2,** a second reagent storage **3,** a reaction table **4,** a first reagent dispenser **6,** a second reagent dispenser 7, a rack transport system **8,** an analytical optical system **11,** a cleaning mechanism **12,** a first stirring device **13,** a second stirring device **14,** and a specimen dispenser **20.**

In the first reagent storage **2,** as shown in FIG. **1****,** a plurality of reagent containers **2a** that store first reagents are arranged in a circumferential direction. The first reagent storage **2** is rotated by driving means (not shown) to transport the reagent containers **2a** in the circumferential direction. The plurality of reagent containers **2a** are filled with reagents depending on inspection items, respectively. Information recording media (not shown) on which information such as types, lots, and expiration dates of the stored reagents are recorded are stuck on outer surfaces of the reagent containers **2a.** In this case, on a periphery of the first reagent storage **2,** a reading device (not shown) that reads the reagent information recorded on the information recording medium stuck on the reagent container **2a** and outputs the reagent information to the control section **15** is installed. Above the first reagent storage **2,** an openable and closable lid (not shown) is arranged to suppress the reagent from being evaporated or transformed. A constant temperature tank (not shown) for cooling reagent is arranged below the first reagent storage **2.**

In the second reagent storage **3,** as shown in FIG. **1****,** a plurality of reagent containers **3a** that store second reagents are arranged in a circumferential direction. Like the first reagent storage **2,** the second reagent storage **3** is rotated by driving means (not shown) to transport the reagent containers **3a** in the circumferential direction. The plurality of reagent containers **3a** are filled with reagents depending on inspection items, respectively. Information recording media (not shown) on which information such as types, lots, and expiration dates of the stored reagents are recorded are stuck on outer surfaces of the reagent containers **3a.** In this case, on a periphery of the second reagent storage **3,** a reading device (not shown) that reads the reagent information recorded on the information recording medium stuck on the reagent container **3a** and outputs the reagent information to the control section **15** is installed. Above the second reagent storage **3,** an openable and closable lid (not shown) is arranged to suppress the reagent from being evaporated or transformed. A constant temperature tank (not shown) for cooling reagent is arranged below the second reagent storage **3.**

On the reaction table **4,** as shown in FIG. **1****,** a plurality of reaction containers **5** are arranged along a circumferential direction. The reaction table **4** is rotated by driving means (not shown) different from the driving means that drives the first and second reagent storages **2** and **3** in a direction indicated by an arrow to move the reaction container **5** in the circumferential direction. The reaction table **4** is arranged between a light source **11a** and an optical splitter **11b** and has a holding section **4a** that holds the reaction container **5** and an optical path **4b** formed by a circular opening that guides a beam emitted from the light source **11a** to the optical splitter **11b.** The holding sections **4a** are arranged at predetermined intervals on the periphery of the reaction table **4** along a circumferential direction, and has the optical path **4b** radially extending on an inner circumferential side of the holding section **4a** formed therein. An openable and closable lid (not shown) is arranged above the reaction table **4,** and a constant temperature tank (not shown) to heat to a temperature at which a reaction between a specimen and a reagent is accelerated is arranged below the reaction table **4.**

The reaction container **5** is a container, called a cuvette, shaped as a rectangular tube made of an optically transparent material, for example, glass including heat-resistant glass, cyclic olefin, or polystyrene that transmits 80% or more of light included in analytical light (340 to 800 nm) emitted from the analytical optical system **11.**

The first reagent dispenser **6** includes an arm **6a** that moves vertically and rotates about a vertical line passing through a proximal end of the arm **6a** freely. At a distal end of the arm **6a,** a probe **6b** that sucks and discharges a specimen is attached. The first reagent dispenser **6** includes a breathing mechanism using a breathing syringe or a piezoelectric element (not shown). The first reagent dispenser **6** sucks the first reagent with the probe **6b** from the reagent container **2a** moved to a predetermined position on the first reagent storage **2** described above, swings the arm **6a** in a clockwise direction in the drawing and discharges the first reagent into the reaction container **5** to perform a dispensing operation. A cleaning tank **6d** that cleans the probe **6b** with cleaning water is installed on a pivotal trace of the probe **6b.**

The second reagent dispenser **7** includes an arm **7a** that moves vertically and rotates about a vertical line passing through the distal end of the arm **7a** freely. At a distal end of the arm **7a,** a probe **7b** that sucks and discharges a specimen is attached. The second reagent dispenser **7** includes a breathing mechanism using a breathing syringe or a piezoelectric element (not shown). The second reagent dispenser **7** sucks the second reagent with the probe **7b** from the reagent container **3a** moved to a predetermined position on the second reagent storage **3** described above, swings the arm **7a** in a counterclockwise direction in the drawing and discharges the second reagent into the reaction container **5** to perform a dispensing operation. A cleaning tank **7d** that cleans the probe **7b** with cleaning water is installed on a pivotal trace of the probe **7b.**

The analytical optical system **11** is an optical system that causes analysis light (340 to 800 nm) to be transmitted through a liquid sample in the reaction container **5** obtained by a reaction between the reagent and the specimen in order to perform analysis, and has the light source **11a,** the optical splitter **11b,** and a light-receiving section **11c.** The analysis light emitted from the light source **11a** transmits through the liquid sample in the reaction container **5** and received by the light-receiving section **11c** arranged at a position opposing the optical splitter **11b.**

In the first and second stirring devices **13** and **14,** stirring rods **13a** and **14a** stir the dispensed specimen and reagent to cause a uniform reaction.

In the cleaning mechanism **12,** a nozzle **12a** sucks and discharges a reaction fluid in the reaction container **5** measured by the analytical optical system **11** and pours and sucks a cleaning solution such as a cleaner or a cleaning fluid to perform cleaning. Although the cleaned reaction container **5** is recycled, the reaction container **5** may be discarded depending on inspection of the contents after measurement is performed once.

The specimen dispenser **20** includes an arm **20a** that moves vertically and rotates about a vertical line passing through a proximal end of the arm **20a** freely. At a distal end of the arm **20a,** a probe **20b** that sucks and discharges a specimen is attached. The specimen dispenser **20** includes a breathing mechanism using a breathing syringe or a piezoelectric element (not shown). The specimen dispenser **20** sucks the specimen with the probe **20b** from the specimen container **9a** moved to a dispensing position by the rack transport system **8** (as will be described below), swings the arm **20a** in a clockwise direction in the drawing and discharges the specimen into the reaction container **5** to perform a dispensing operation. A cleaning tank **20d** that cleans the probe **20b** with cleaning water is installed on a pivotal trace of the probe **20b.**

The rack transport system **8,** as shown in FIG. **1****,** includes a rack tray set section **8A** on which a rack tray **10** in which a plurality of racks **9** supporting a plurality of specimen containers **9a are** arranged and held is placed, a rack collecting section **8C** on which an empty rack tray **10** is placed and that collects a rack supporting a specimen container the dispensing operation of which is complete, and a transport mechanism **8B** that transports the rack **9** which is pushed out of the rack tray set section **8A** with a push-out lever **8a** to the dispensing position of the specimen dispenser **20** and transports the rack **9** to the rack collecting section **8C** after the specimen is dispensed by the specimen dispenser **20** from the specimen container **9a** supported by the rack **9.**

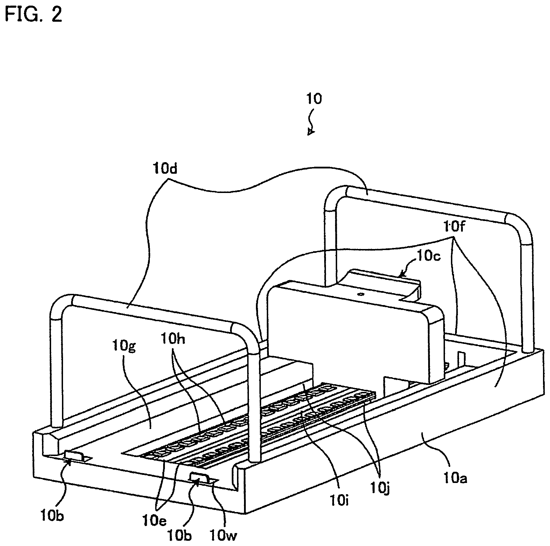

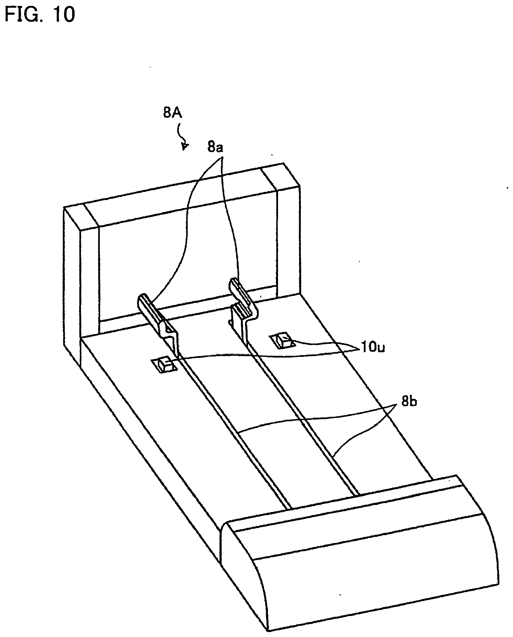

In order to supply the specimen container **9a to** the specimen dispenser **20,** the rack tray **10** is placed on the rack tray set section **8A,** the plurality of racks **9** set in the rack tray **10** by the transport mechanism **8B** are transported by the push-out lever **8a** in a first direction indicated by an arrow D1 to sequentially send the plurality of racks **9** to the transport mechanism **8B.** The push-out lever **8a** is transported by transporting means such as a belt conveyor (not shown). The transport mechanism **8B** transports the rack **10** sent with the push-out lever **8a** to the dispensing position of the specimen dispenser **20** while stepping the rack **10** along the transport mechanism **8B** that extends to the specimen dispenser **20.** In the rack tray **10** before being arranged in the rack transport system **8,** the rack dropout-preventing mechanism **10b** projects into the opening of the rack tray **10** to prevent the rack **9** from being dropped out of the opening (see FIG. **2**). However, when the rack tray **10** is arranged in the rack tray set section **8A,** a rack dropout prevention canceling mechanism **10u** (see FIG. **10**) on the rack tray set section **8A** (will be described below) cancels the lock of the rack dropout-preventing mechanism **10b** to make it possible to transport the rack **9** from the opening to the transport mechanism **8B** with the push-out lever **8a.**

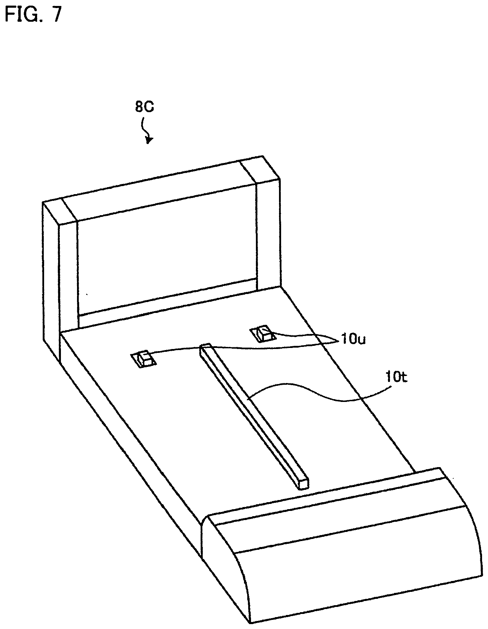

After the specimen is dispensed by the specimen dispenser **20** from the specimen container **9a** supported by the rack **9,** the transport mechanism **8B** transports the rack **9** from the dispensing position of the specimen dispenser **20** to a position opposing the rack collecting section **8C.** The rack **9** is pushed out of the transport mechanism **8B** to a side of the rack collecting section **8C** with a push-out lever (not shown) in a direction indicated by an arrow D2, and the rack **9** is collected by the rack tray **10.** Like the rack tray set section **8A,** the rack collecting section **8C** includes the rack dropout prevention canceling mechanism **10u** (see FIG. **7****).** When the empty rack tray **10** is set in the rack collecting section **8C,** the rack dropout-preventing mechanism **10b** is unlocked to make it possible to transport the rack **9** from the transport mechanism **8B** to the rack collecting section **8C** with a push-out lever (not shown).

The control mechanism **50** includes the control section **15,** an input section **16,** the analyzing section **17,** a memory section **18,** and an output section **19.** The control section **15** is connected to each section included in the measuring mechanism **40** and the control mechanism. As the control section **15,** a microcomputer or the like is used to control operations of each section. The control section **15** performs predetermined input/output control about information input/output in/from each constituent part and performs predetermined information processing on the information. The control section **15** controls operations of each section of the automatic analyzing apparatus **1** and, when an expiration date or the like of the reagent is out of a set range on the basis of the information read from the information recording medium, controls the automatic analyzing apparatus **1** to stop an analyzing operation or gives an alarm to an operator. The control section **15** also functions as a transport control section that controls an operation of the rack transport system **8.**

The input section **16** is constituted by using a keyboard, a mouse, or the like and acquires various pieces of information required for analysis of a specimen, instruction information of an analyzing operation from the outside. The analyzing section **17** arithmetically operates an absorbance or the like on the basis of a measurement result acquired from the analytical optical system **11** to perform constituent analysis of a specimen or the like. The memory section **18** is configured by using a hard disk that magnetically stores information and a memory that, when the automatic analyzing apparatus **1** executes processing, loads various programs related to that processing from the hard disk and electrically stores the various programs, and stores the various programs to store various pieces of information including an analysis result of the specimen or the like. The memory section **18** may include an auxiliary memory device that can read information stored in a storage medium such as a CD-ROM, a DVD-ROM, or a PC card. The output section **19** is configured by using a printer, a communication mechanism, or the like, and outputs various pieces of information including an analysis result of the specimen to notify a user.

In the automatic analyzing apparatus **1** configured as described above, after the first reagent dispenser **6** dispenses a first reagent in the reagent container **2a** to the plurality of reaction containers **5** sequentially transported in line, the specimen dispenser **20** dispenses the specimen in the specimen container **9a,** the second reagent dispenser **7** dispenses a second reagent in the reagent container **3a,** and the analytical optical system **11** measures a spectroscopic intensity of a sample obtained by a reaction between a specimen and a reagent. The measurement result is analyzed by the analyzing section **17** to automatically perform constituent analysis of the specimen or the like. The reaction container **5** that is transported after completion of the measurement by the analytical optical system **11** is cleaned by the cleaning mechanism **12** while the reaction container **5** is being transported, thereby a series of analyzing operations are continuously repeated.

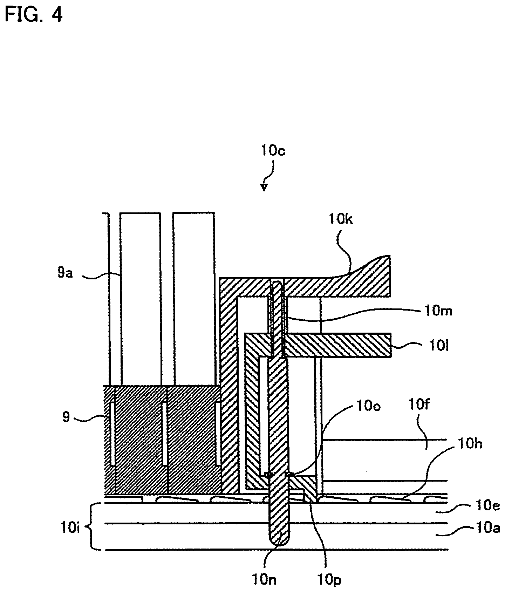

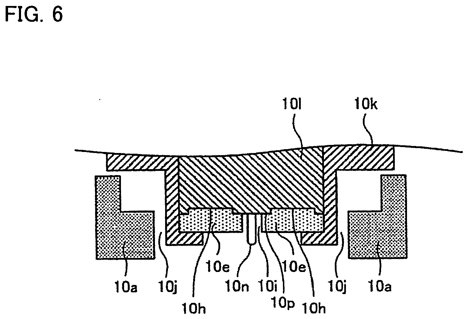

The rack tray **10** according to Embodiment 1 will be described below in detail with reference to FIG. **2.** FIG. **2** is a perspective view of the rack tray **10** according to Embodiment 1. The rack tray **10** roughly includes a tray base **10a,** a rack dropout-preventing mechanism **10b,** a rack movement-preventing mechanism **10c,** a grip member **10d,** and a guide rail **10e.** The tray base **10a** has a substrate **10g** supporting the rack **9,** and guide walls **10f** are arranged on three sides of the substrate **10g.** The rack tray **10** has an opening in a side where the guide wall **10f** is not formed, the rack dropout-preventing mechanism **10b** projects into the opening to prevent the plurality of racks **9** stored on the tray base **10a** from being dropped out from the opening. The grip members **10d** are arranged on the opening and the guide wall **10f** on the side opposing the opening, and a holding section of the grip member **10d** is gripped to transport the rack tray **10.** The grip member **10d** shown in FIG. **2** vertically rises from the guide wall **10f** and bends at the holding section to form an inverted U-shape. However, the grip member **10d** arranged on the opening may have a bent section that can be horizontally bent outside the tray base **10a** in the middle of a vertically rising pipe to make it possible to offset the holding section outside the rack tray **10.** The grip member **10d** is offset to make it easy to take in/out the rack **9.** The guide rail **10e,** in Embodiment 1, is integrated with the tray base **10a** and formed in parallel to the traveling direction of the arranged and held racks 9. There is a trench 10i at a center section of the guide rail 10e and the trench 10i is provided for a shaft (as will be described later) to travel. On upper surface of the guide rail 10e, a plurality of engagement sections 10h are formed at positions corresponding to the number of racks to be stored. The rack movement-preventing mechanism 10c is supported by the guide rail 10e by sandwiching the guide rail 10e from a side of a trench 10j (see FIG. 6). A projection 10p (see FIG. 4) serving as a locking section of the rack movement - preventing mechanism 10c (will be described later) is engaged with the engagement section 10h formed on the guide rail 10e to lock the rack movement-preventing mechanism 10c. In this manner, the held rack 9 is prevented from moving.

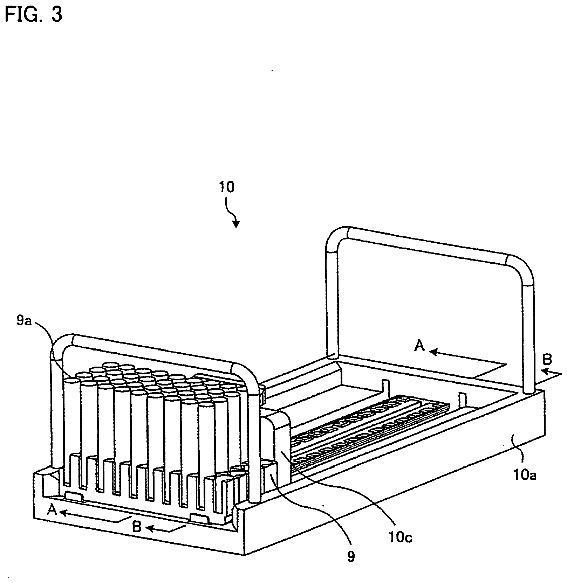

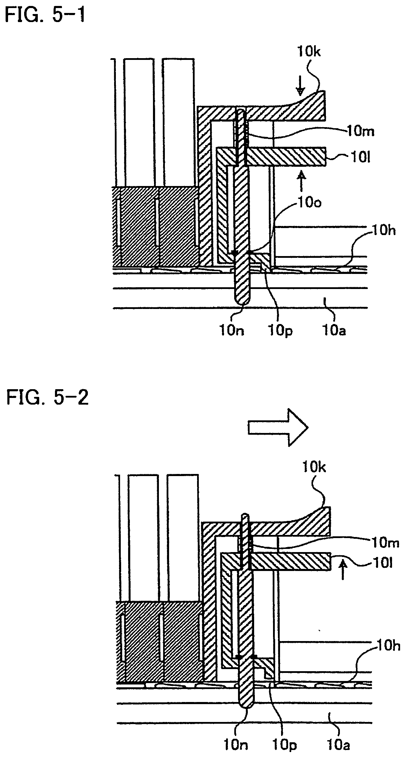

The rack movement-preventing mechanism 10c will be described below with reference to the drawing. FIG. 3 is a perspective view of the rack tray 10 in which the rack 9 holding the specimen container 9a is stored. FIG. 4 is a sectional view of the rack tray 10 in FIG. 3 along an A - A line. FIGS. 5-1 and 5-2 are operational diagrams of the rack movement-preventing mechanism 10c. FIG. 6 is a cross-sectional view of the engagement section including the rack movement-preventing mechanism 10c and the guide rail 10e.

As shown in FIG. 3, the racks 9 holding the specimen containers 9a are arranged in the tray base 10a of the rack tray 10 in parallel from the opening and pushed on the opening side by the rack movement-preventing mechanism 10c to prevent the rack **9** from moving and falling. As shown in FIG. **4****,** the rack movement-preventing mechanism **10c** has a handle section including a partition **10k** and a partition **10l,** a push spring **10m** is arranged between the partition **10k** and the partition **10l** to bias the partition **101** downward. The projection **10p** is formed at a distal end of the partition **10l.** The projection **10p** is engaged between the plurality of engagement sections **10h** arranged on the guide rail **10e** at intervals each having a width of the rack **9** as one pitch. A shaft **10n** extending to the lower section of the guide rail **10e** is supported on the partition **10l,** and an E ring **10o** is attached between the shaft **10n** and the partition **101.** In the movement of the rack movement-preventing mechanism **10c,** the shaft **10n** moves in the trench **10i** formed between the guide rails **10e** (see FIG. **2****,** FIG. **4****,** and FIG. **6**). The shaft **10n** serves a part of a lock canceling mechanism that cancels prevention of movement of the rack **9** by the rack movement-preventing mechanism **10c** when the rack tray **10** is placed on the rack collecting section **8C.**

The engagement section **10h** has a protruding shape, an inclination of a slope on the opening side in the traveling direction of the rack **9** is set to be high, and an inclination of the other slope is set to be low. For this reason, in order to move the rack movement-preventing mechanism **10c** on the opening side in the traveling direction, the partition **10k** or the partition **10l** serving as a handle section may be pushed. However, when the partition **10k** or the partition **10l** is pushed in the opposite direction, the rack movement-preventing mechanism **10c** cannot be moved to the rear side of the opening opposing the traveling direction, and backward movement is locked since the inclination of the engagement section **10h** on the opening side is high. In order to move the rack movement-preventing mechanism **10c** in a forward or backward direction, as shown in FIG. **5-1****,** the partition **10k** and the partition **10l** serving as handle sections are gripped from the upper and lower sides and pushed. In this manner, the partition **10l** is pushed up. When the partition **10l** is pushed up, as shown in FIG. **5-2****,** the projection **10p** at the distal end of the partition **101** rises. When the partition **10l** is pushed up, the engagement between the projection **10p** of the rack movement-preventing mechanism **10c** and the engagement section **10h** on the guide rail **10e** is canceled to make it possible to move the rack movement-preventing mechanism **10c** to the rear side of the opening. The rack **9** held and stored on the rack tray **10** is prevented by the rack dropout-preventing mechanism **10b** and the rack movement-preventing mechanism **10c** from moving in a forward or backward direction and prevented by the opposite guide walls **10f** of the rack tray **10** from longitudinal moving. However, since the upward movement is not inhibited, a part of the rack **9** is pulled up to make it possible to freely pick any one of the racks **9** to be stored from an arbitrary position of the rack tray **10** without moving the rack movement-preventing mechanism **10c,** and the rack **9** can be very easily taken in or out.

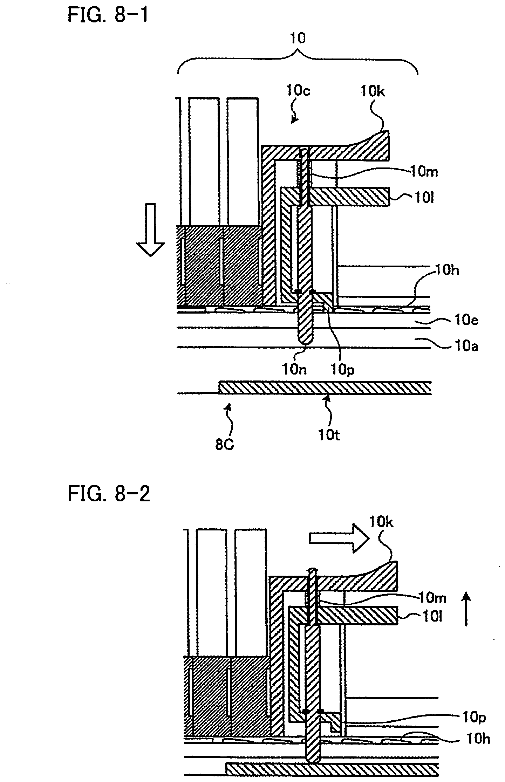

A lock canceling mechanism of the rack movement-preventing mechanism **10c** will be described below with reference to FIG. **7****,** FIG. **8-1****,** and FIG. **8-2****.** FIG. **7** is a perspective view of the rack collecting section **8C.** FIGS. **8-1** and **8-2** are operational diagrams of lock cancellation of the rack movement-preventing mechanism **10c.** When the rack tray **10** is set on the rack collecting section **8C** to collect the rack **9,** the locked rack movement-preventing mechanism **10c** hinders the rack **9** from being collected. Therefore, in order to save a trouble of manually moving the rack movement-preventing mechanism **10c,** the lock canceling mechanism of the rack movement-preventing mechanism **10c** is arranged. As shown in FIG. **7****,** on the rack collecting section **8C,** a push-up section **10t** serving as a lock canceling mechanism of the rack movement-preventing mechanism **10c** together with the shaft **10n** and the push-up section **10u** serving as a lock canceling mechanism of the rack dropout-preventing mechanism **10b** are formed. The push-up section **10t** is a narrow protrusion formed at a center section of the rack collecting section **8C** in parallel to the rack traveling direction. As shown in FIG. **8-1****,** when the rack tray **10** is arranged on the rack collecting section **8C,** the shaft **10n** extending to the lower section of the guide rail **10e** is brought into contact with the push-up section **10t** on the rack collecting section **8C** and pushed up. When the shaft **10n** is pushed up, the partition **10l** fixed to the shaft **10n** is also pushed up. For this reason, as shown in FIG. **8-2****,** the projection **10p** at the distal end of the partition **10l** is lifted up to cancel the engagement with the engagement section **10h** on the guide rail **10e.** With the lock cancelling mechanism of the rack movement-preventing mechanism **10c,** the rack movement-preventing mechanism **10c** can be moved in a direction opposing the opening without gripping and pressing the partition **10k** and the partition **10l** serving as the handle sections from the upper and lower sides. In this manner, when the rack **9** is pushed to the rack collecting section **8C** side with a push lever of the transport mechanism **8B,** the unlocked rack movement-preventing mechanism **10c** is also moved in the direction opposing the opening of the rack tray **10** together with the rack **9.**

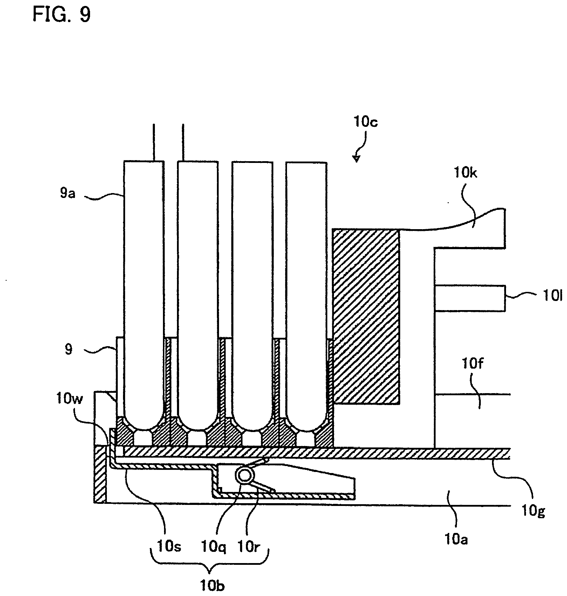

The rack dropout-preventing mechanism **10b** will be described below with reference to the drawings. FIG. **9** is a cross-sectional view of the rack tray **10** in FIG. **3** along a B - B line. As shown in FIG. **9****,** the rack dropout-preventing mechanism **10b** has a dropout-preventing lever **10s** that prevent the rack **9** from being dropped out of the opening. The planar dropout-preventing lever **10s** which is formed in a staircase pattern horizontally extends under the substrate **10g** and is bent from a hole **10w** (see FIG. **2**) formed near the opening and vertically rises up to prevent the rack **9** from being dropped out. The dropout-preventing lever **10s** is supported on the substrate **10g** of the tray base **10a** with a shaft **10q,** a spring **10r** is set between the bottom surface of the substrate **10g** and the dropout-preventing lever **10s** to upwardly bias an end section of the dropout-preventing lever **10s** rising up from the hole **10w.** In FIG. **9****,** although a coil spring is used as the spring **10r,** a leaf spring, a tension spring, or the like may be used.

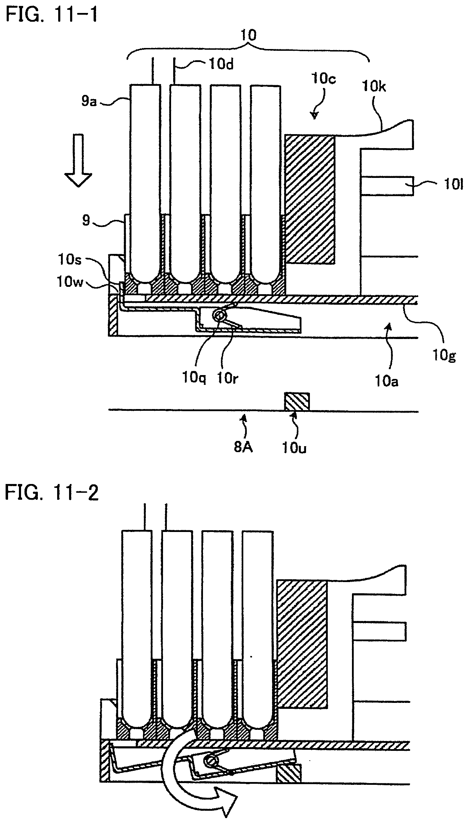

With reference to FIG. **10****,** FIG. **11-1,** and FIG. **11-2****,** the lock canceling mechanism of the rack dropout-preventing mechanism **10b** will be described below. FIG. **10** is a perspective view of a rack tray set section **8A.** FIGS. **11-1** and FIG. **11-2** are operational diagrams of lock cancellation of the rack dropout-preventing mechanism **10b.** As shown in FIG. **10****,** on the rack tray set section **8A,** the push-out lever **8a** that pushes out the rack **9** on the transport mechanism **8B** side and the push-up section **10u** serving as the lock canceling mechanism of the rack dropout-preventing mechanism **10b** are formed. The push-up section **10u** is a projection formed on the rack tray set section **8A** on the opening side. In Embodiment 1, since the rack dropout-preventing mechanisms **10b** are formed at two positions (left and right), the push-up sections **10u** are also formed at two positions. The push-out lever **8a** is built in the rack tray set section **8A** before the rack tray **10** is arranged, and travels through the trench **8b** and the trench **10j** of the rack tray **10** after the rack tray **10** is arranged, to push out the rack **9** on the opening side. As shown in FIG. **11-1****,** when the rack tray **10** is set on the rack tray set section **8A,** an end section of the dropout-preventing lever **10s** horizontally extending under the substrate **10g** is brought into contact with the push-up section **10u** on the rack tray set section **8A.** The end section of the dropout-preventing lever **10s** is pushed up by the push-up section **10u** with the contact, and the other end of the dropout-preventing lever **10s** is pushed down by using the shaft **10q** as a rotating axis. In this manner, as shown in FIG. **11-2****,** the dropout-preventing lever **10s** vertically rising from the hole **10w** formed in the opening is pulled down to cancel the locked state. The push-out lever **8a** built in the rack tray set section **8A** is traveled to push out the rack **9** to the transport mechanism **8B,** and the transport mechanism **8B** transports the rack **9** to the specimen dispenser **20.** In Embodiment 1, the rack tray set section **8A** does not include the push-up section **10t** serving as the lock canceling mechanism of the rack movement-preventing mechanism **10c.** However, when the partition **10k** of the rack movement-preventing mechanism **10c** is only slightly pushed, the rack movement-preventing mechanism **10c** can be moved. For this reason, the rack tray set section **8A** may include the push-up section **10t.**

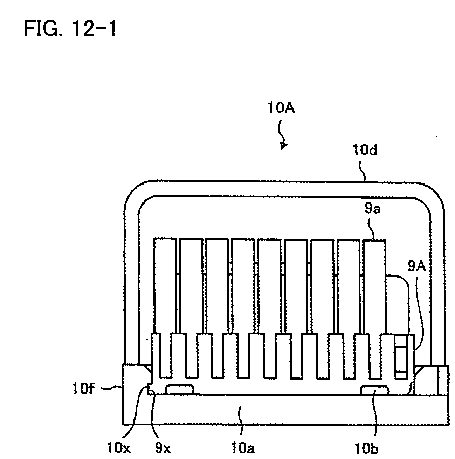

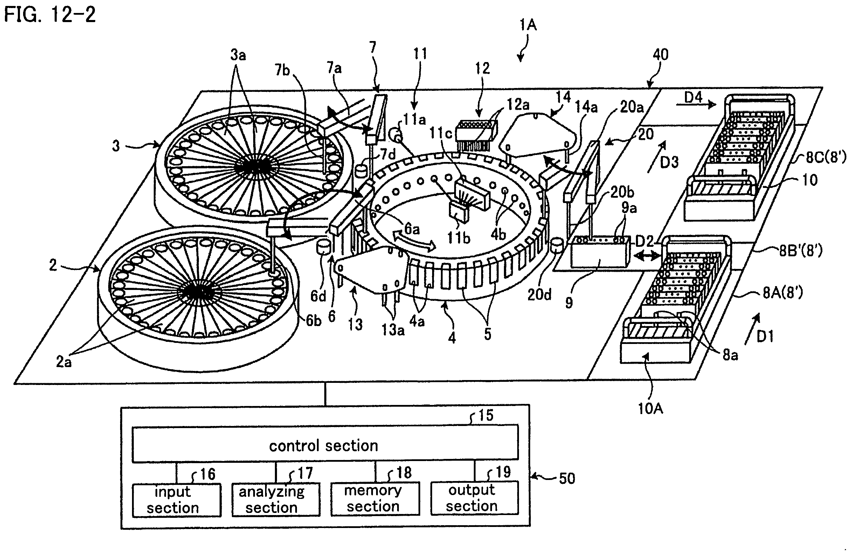

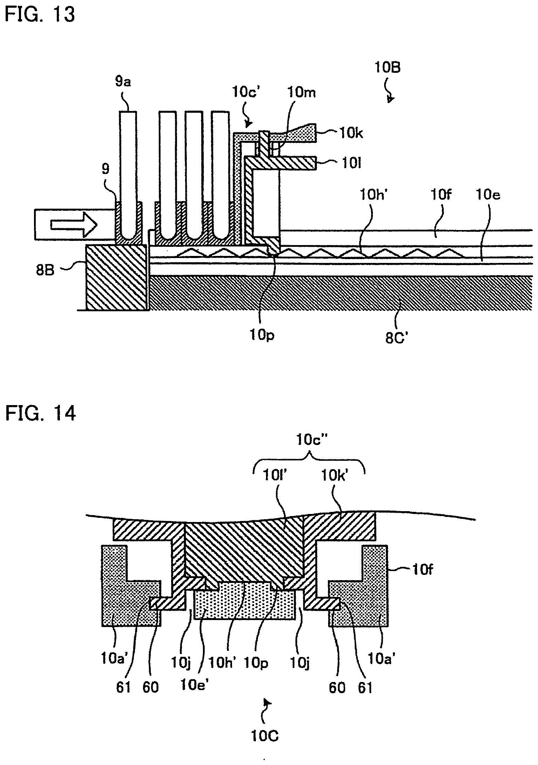

As a modification of the rack tray **10** according to Embodiment 1, as shown in FIG. **12-1****,** a rack tray **10A** in which a side surface section, being in contact with a rack **9A,** of the guide wall **10f** of any one of the two sides parallel to the traveling direction of the rack **9** is hollowed out to form a fitting section **10x** on the side surface section is illustrated. The fitting section **10x** is formed on an entire lower section of the side surface being in contact with the substrate **10g** of the guide wall **10f.** On the rack tray **10A,** the rack **9A** having a projection section **9x** fitted in the fitting section **10x** is preferably stored. The rack tray **10A** and the rack **9A** are fitted through the fitting section **10x** and the projection section **9x** to make it possible to more stably transport the rack tray and set the rack tray in the apparatus. The fitting section **10x** prevents the rack **9** from falling and moving together with the rack movement-preventing mechanism **10c.** In FIG. **12-1****,** the fitting section **10x** is a rectangular recessed section, and the projection section **9x** is a rectangular projection section fitted in the recessed section. The fitting section **10x** and the projection section **9x** need only be fitted in each other, and trapezoidal shapes or the like may be employed. In use of the rack **9A** and the rack tray **10A** shown in FIG. **12-1****,** an automatic analyzing apparatus **1A** including a rack transport system **8'** as shown in FIG. **12-2** is used. Since the rack **9A** and the rack tray **10A** are horizontally asymmetrical because the projection section **9x** and the fitting section **10x** are formed, the rack **9A** cannot be easily collected in the rack collecting section **8C** when the rack trays **10A** in the rack tray set section **8A** and the rack collecting section **8C are** faced. Therefore, when the rack **9A** and the rack tray **10A** are used, as shown in FIG. **12-2****,** the arrangements of the rack tray set section **8A** and the rack collecting section **8C** need to be changed to change the rack transport system such that the rack trays **10A** are arranged in the same direction. As another modification, a rack tray **10B** shown in FIG. **13** is illustrated. In the rack tray **10B,** a rack movement-preventing mechanism **10c'** does not have the shaft **10n,** and inclinations of two slopes of the engagement section **10h'** on the guide rail **10e** are set to be equal to each other. When the inclinations of the slopes are set to be equal to each other, the rack movement-preventing mechanism **10c'** can be moved in the forward or backward directions with the same force. When the rack **9** is pushed with a push-out lever (not shown) of the transport mechanism **8B,** the projection **10p** runs on the engagement section **10h'** to make it possible to cancel the locked state.

In Embodiment 1, on the basis of FIG. **1****,** the rack transport system **8** having one rack tray set section **8A** and one rack collecting section **8C** has been described. However, the number of rack tray set sections and the number of rack collecting sections need only be equal to each other, the system may have two or more rack tray set sections and two or more rack collecting sections. Furthermore, in FIG. **1****,** the automatic analyzing apparatus having the rack transport system **8** arranged on the right of the specimen dispenser **20** is illustrated. However, various modifications, made without departing from the object of the present invention, such as a rack transport system in which the rack tray set section **8A** is arranged near and on the right of the specimen dispenser **20,** the rack collecting section **8C** is arranged on the left and the transport mechanism **8B** is arranged in the lower section of the analyzing apparatus such that the rack tray set section **8A** is connected to the rack collecting section **8C** can be used.

### (Embodiment 2)

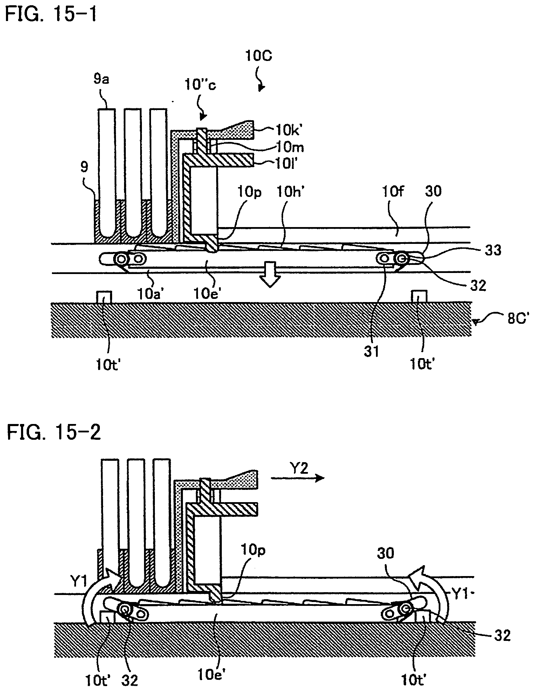

A rack tray and a rack transport system according to Embodiment 2 of the present invention will be described below with reference to the drawings. FIG. **14** is a cross-sectional view of an engagement section including a rack movement-preventing mechanism **10c"** and a guide rail **10e'.** FIG. **15-1** and FIG. **15-2** are sectional views showing a rack tray **10C** according to Embodiment 2 together with the rack **9** and a rack collecting section **8C'.** The rack tray **10C** according to Embodiment 2 is considerably different from that of Embodiment 1 in that the guide rail **10e'** is formed independently of the tray base. As shown in FIG. **14****,** the rack movement-preventing mechanism **10c"** does not have a shaft **10n** (see FIG. **4**). Therefore, the guide rail **10e'** does not have the trench **10i** through which the shaft **10n** passes, and one engagement section **10h'** is arranged at each position of the guide rail **10e'.** The partition **10k'** includes a projection **60** at the distal end thereof such that the partition **10k'** is supported by a tray base **10a'** not the guide rail **10e',** and the projection **60** is engaged with an engagement section **61** formed on the tray base **10a'.** As shown in FIG. **14****,** the guide rail **10e'** according to Embodiment 2 is formed independently of the tray base **10a'** and jointed to the tray base **10a'** through a joint member **30.** A spring **33** that biases to rise up the guide rail **10e'** is arranged between the joint member **30** and the guide rail **10e'.** The guide rail **10e'** is jointed to the joint member **30** by the joint section **31** and supported on the tray base **10a'** by a shaft **32** serving as a joint section between the joint member **30** and the tray base **10a'.** The shape of the engagement section **10h'** on the guide rail **10e'** and the engagement between the engagement section **10h'** and the projection **10p** of the partition **101'** are the same as those in Embodiment 1 except that one engagement section **10h'** is formed at each position on the guide rail **10e'.** The partition **10k'** or the partition **10l'** serving as a handle section is pushed to make it possible to move the rack movement-preventing mechanism **10c"** to the opening side. However, movement in the opposite direction cannot be done until the partition **10k'** and the partition **10l'** are gripped and pressed from the upper and lower sides to cancel the engagement of the engagement section **10h'** and the projection **10p.** A description of the rack dropout-preventing mechanism **10b** is omitted. However, the rack tray **10C** includes the rack dropout-preventing mechanism **10b** as in Embodiment 1.

A rack transport system using the rack tray **10C** according to Embodiment 2 will be described below. The rack transport system using the rack tray **10C,** like the rack transport system according to Embodiment 1, includes a rack tray set section, a transport mechanism, and a rack collecting section. However, the rack collecting section **8C'** according to Embodiment 2, as shown in FIG. **15-1****,** includes a push-up section **10t'** that pushes up the joint member **30** of the rack tray **10C** to push down the guide rail **10e'.** The push-up section **10t'** is arranged on the rack collecting section **8C'** under the joint member **30.** As shown in FIG. **15-1****,** when the rack tray **10C** is arranged in the rack collecting section **8C'** from above, the push-up section **10t'** is brought into contact with the joint member **30,** as indicated by an arrow Y1 in FIG. **15-2****,** the push-up section **10t'** pushes up the joint member **30** from the outside. With the push-up operation, the joint member **30** rotates by using the shaft **32** as a rotating axis to push down the guide rail **10e'.** When the guide rail **10e'** is pushed down, the engagement between the projection **10p** at the distal end of the partition **10l'** and the engagement section **10h** is canceled to make it possible to move the rack movement-preventing mechanism **10c"** in a backward direction (indicated by an arrow Y2).

### INDUSTRIAL APPLICABILITY

As described above, a rack tray, a rack, and a rack transport system according to the present invention are effectively used in an automatic analyzing apparatus that optically measures a reaction between a specimen and a reagent to analyze components of the specimen, and in particular, are suitable for safe transport and setting in the apparatus when a plurality of racks supporting substance containers are arranged.

## Claims

1. A rack tray (10, 10A, 10B, 10C) configured to hold a plurality of racks (9) supporting a plurality of specimen containers (9a), comprising:
a tray base (10a) configured to store the plurality of racks (9) and having a substrate (10g) which is configured to support the plurality of racks (9);
a rack dropout-preventing mechanism (10b) configured to prevent the racks (9) from being dropped out when the racks (9) are stored on the tray base (10a);
the rack dropout-preventing mechanism (10b) comprising a dropout-preventing lever (10s), which is formed in a staircase pattern horizontally extending under the substrate (10g) and which is bent from a hole (10w) formed near the opening and vertically rises up to prevent the rack (9) from being dropped out; the dropout-preventing lever (10s) further being supported by the substrate (10g) of the tray base (10a) with a shaft (10q), wherein a spring (10r) is set between the bottom surface of the substrate (10g) and the dropout-preventing lever (10s) configured to upwardly bias an end section of the dropout-preventing lever (10s) rising up from the hole (10w);
the rack tray (10, 10A, 10B, 10C) **characterized by** further comprising:
a rack movement-preventing mechanism (10c, 10c', 10c") comprising a handle section configured to be moved on the tray base (10a) to press the plurality of racks (9) arranged on the tray base (10a) to a side of the rack dropout-preventing mechanism (10b) to prevent movement of the plurality of racks (9); and
a guide rail (10e, 10e') having a plurality of engagement sections (10h, 10h') at positions corresponding to the number of racks (9) held, the guide rail (10e, 10e') being integrated with the tray base (10a), wherein a projection (10p) serving as a locking section (10p) held by the rack movement-preventing mechanism (10c, 10c', 10c") is configured to be engaged with an engagement section (10h, 10h') to lock the movement of the racks (9);
each engagement section (10h, 10h') being a projection formed on the guide rail (10e, 10e'), the projection comprising first and second slopes, the first slope facing the rack tray opening, the second slope being on the opposite side of the first slope, wherein an inclination of the first slope is higher than an inclination of the second slope;
the handle section including a partition (10k) and a partition (10l), a push spring (10m) arranged between the partition (10k) and the partition (10l) to bias the partition (10l) downward, and the projection (10p) being formed at a distal end of the partition (10l); the handle section configured to push up the projection (10p) by gripping the partition (10k) and the partition (10l) from the upper and lower sides and pushing the partition (10l) towards the partition (10k) to cancel the engagement of the projection with an engagement section (10h, 10h'), and allowing the rack movement-preventing mechanism (10c, 10c', 10c") to be moved;
the rack movement-preventing mechanism (10c, 10c', 10c") further including a shaft (10n) supported by the handle section and extending to a lower section of the guide rail (10e, 10e'), the guide rail (10e, 10e') including a trench section through which the shaft (10n) passes with movement of the rack movement-preventing mechanism (10c).

2. The rack tray (10, 10A, 10B, 10C) according to claim 1, **characterized by** comprising grip members (10d) on two opposite sides parallel to an arrangement direction of the racks (9) stored on the tray base (10a).

3. The rack tray (10C) according to claim 1 or 2, **characterized in that** the tray base (10a') includes guide walls (10f) on three sides except for the opening in the rack traveling direction, and the guide wall (10f) of any one of two sides parallel to the traveling direction has a fitting section (10x) formed on a side surface thereof for fitting with a projection section (9x) of the racks (9A).

4. A rack tray (10, 10A, 10B, 10C) configured to hold a plurality of racks (9) supporting a plurality of specimen containers (9a), comprising:
a tray base (10a') configured to store the plurality of racks (9) and having a substrate (10g) which is configured to support the plurality of racks (9);
a rack dropout-preventing mechanism (10b) configured to prevent the racks from being dropped out when the racks are stored on the tray base (10a');
the rack dropout-preventing mechanism (10b) comprising a dropout-preventing lever (10s), which is formed in a staircase pattern horizontally extending under the substrate (10g) and which is bent from a hole (10w) formed near the opening and vertically rises up to prevent the rack (9) from being dropped out;
the dropout-preventing lever (10s) further being supported by the substrate (10g) of the tray base (10a) with a shaft (10q), wherein a spring (10r) is set between the bottom surface of the substrate (10g) and the dropout-preventing lever (10s) configured to upwardly bias an end section of the dropout-preventing lever (10s) rising up from the hole (10w);
the rack tray (10, 10A, 10B, 10C) **characterized by** further comprising:
a rack movement-preventing mechanism (10c, 10c', 10c") comprising a handle section configured to be moved on the tray base (10a') to press the plurality of racks (9) arranged on the tray base (10a) to a side of the rack dropout-preventing mechanism (10b) to prevent movement of the plurality of racks; and
the handle section including a partition (10k') and a partition (10l); wherein the partition (10k') includes a projection (60) at the distal end thereof such that the partition (10k') is supported by a tray base (10a') and wherein the projection (60) is engaged with an engagement section (61) formed on the tray base (10a');
a guide rail (10e') having a plurality of engagement sections (10h, 10h') at positions corresponding to the number of racks (9) held, wherein the projection (60) is configured to be engaged with an engagement section (10h, 10h') to lock the movement of the rack (9);
each engagement section (10h, 10h') being a projection formed on the guide rail (10e, 10e'), the projection comprising first and second slopes, the first slope facing the rack tray opening, the second slope being on the opposite side of the projection from the first slope, wherein an inclination of the first slope is higher than an inclination of the second slope;
the guide rail (10e, 10e') being formed independently of the tray base (10a), jointed to the tray base (10a) by joint sections (31) at the edges of two axisymmetric joint members (30), each joint member (30) rotatable around a shaft (32) arranged along their respective axis of symmetry, each shaft (32) supported on the tray base (10a') and serving as a joint section between the respective joint member (30) and the tray base (10a'), and a spring (33) configured to bias to push up the guide rail (10e'), the spring (33) being arranged between the joint member (30) and the guide rail (10e'), the two axisymmetric joint members (30) configured to be pushed up at their edges opposite the edges bearing the joint sections to allow to cancel the engagement of the projection with the engagement section (10h, 10h'), and the rack movement-preventing mechanism (10c, 10c', 10c") to be moved.

5. The rack tray (10, 10A, 10B, 10C) according to any one of claims 1 to 4, **characterized in that** the grip member (10d) arranged on the opening side of the rack (9) in the traveling direction is arranged such that the holding section (4a) is offset from an arrangement position of the grip member (10d).

6. A rack transport system (8, 8') comprising:
a rack tray set section (8A) configured for a rack tray (10, 10A, 10B, 10C) to be placed thereon, the rack tray (10, 10A, 10B, 10C) being a rack tray according to any one of claims 1 to 5, configured to hold the plurality of racks (9) supporting a plurality of specimen containers (9a);
a rack collecting section (8C) configured for an empty rack tray (10, 10A, 10B, 10C) to be placed thereon, the empty rack tray (10, 10A, 10B, 10C) being a rack tray according to any one of claims 1 to 5 configured to collect a rack (9) supporting a plurality of specimen containers (9a) that are aspirated; and
a transport mechanism (8B) configured to transport the rack (9) from the rack tray set section (8A) to an aspirating mechanism, aspirate specimens from all the specimen containers, and thereafter transport the rack (9) to the rack collecting section (8C);
the rack collecting section (8C) including a lock canceling mechanism of a rack movement-preventing mechanism (10c, 10c', 10c") of the rack tray (10, 10A, 10B, 10C); the lock canceling mechanism being a push-up member configured to push up a shaft (10n) of the rack tray (10).

7. The rack transport system (8, 8') according to claim 6, **characterized in that** the lock canceling mechanism is a push-up member (10t') configured to push up a joint member (30) of the rack tray (10C) such that the guide (10e') rail of the rack tray (10C) is pushed down.

8. The rack transport system (8, 8') according to any one of claims 6 or 7, **characterized in that** the rack tray set section (8A) and the rack collecting section (8C) include a lock canceling mechanism (10u) of a rack dropout-preventing mechanism (10b) of the rack tray (10).

## Patentansprüche

1. Ein Ständergestell (10, 10A, 10B, 10C), das konfiguriert ist, um eine Vielzahl von Ständern (9) aufzunehmen, die eine Vielzahl von Probenbehältern (9a) tragen, das Folgendes umfasst:
eine Gestellbasis (10a), die konfiguriert ist, um die Vielzahl von Ständern (9) aufzunehmen, und die ein Substrat (10g) aufweist, das konfiguriert ist, um die Vielzahl von Ständern (9) zu tragen;
einen Mechanismus zur Verhinderung des Herausfallens von Ständern (10b), der konfiguriert ist, um zu verhindern, dass die Ständer (9) herausfallen, wenn die Ständer (9) auf der Gestellbasis (10a) abgelegt sind;
wobei der Mechanismus zur Verhinderung des Herausfallens von Ständern (10b) einen Hebel zur Verhinderung des Herausfallens (10s) umfasst, der in einem Treppenmuster ausgebildet ist, das sich horizontal unter dem Substrat (10g) erstreckt und der ausgehend von einem in der Nähe der Öffnung ausgebildeten Loch (10w) gebogen ist, und der vertikal nach oben steigt, um zu verhindern, dass der Ständer (9) herausfällt; wobei der Hebel zur Verhinderung des Herausfallens (10s) ferner vom Substrat (10g) der Gestellbasis (10a) mit einer Welle (10q) getragen wird, wobei eine Feder (10r) zwischen die Unterseite des Substrats (10g) und den Hebel zur Verhinderung des Herausfallens (10s) gesetzt wird, die konfiguriert ist, um einen Endabschnitt des Hebels zur Verhinderung des Herausfallens (10s), der aus dem Loch (10w) aufsteigt, nach oben vorzuspannen;
wobei das Ständergestell (10, 10A, 10B, 10C) **dadurch gekennzeichnet ist, dass** es ferner Folgendes umfasst:
einen Ständerbewegungs-Verhinderungsmechanismus (10c, 10c', 10c"), der einen Griffabschnitt umfasst, der konfiguriert ist, um auf der Gestellbasis (10a) bewegt zu werden, um die Vielzahl von Ständern (9), die auf der Gestellbasis (10a) angeordnet sind, an eine Seite des Mechanismus zur Verhinderung des Herausfallens von Ständern (10b) zu drücken, um eine Bewegung der Vielzahl von Ständern (9) zu verhindern; und
eine Führungsschiene (10e, 10e') mit einer Vielzahl von Eingriffsabschnitten (10h, 10h') an Positionen, die der Anzahl der gehaltenen Ständer (9) entsprechen, wobei die Führungsschiene (10e, 10e') in der Gestellbasis (10a) integriert ist, wobei ein Vorsprung (10p), der als Verriegelungsabschnitt (10p) dient, der vom Ständerbewegungs-Verhinderungsmechanismus (10c, 10c', 10c") gehalten wird, konfiguriert ist, um mit einem Eingriffsabschnitt (10h, 10h') in Eingriff gebracht zu werden, um die Bewegung der Ständer (9) zu verriegeln;
wobei jeder Eingriffsabschnitt (10h, 10h') ein Vorsprung ist, der auf der Führungsschiene (10e, 10e') ausgebildet ist, wobei der Vorsprung eine erste und eine zweite Steigung umfasst, wobei die erste Steigung der Ständergestellöffnung zugewandt ist, wobei die zweite Steigung auf der gegenüberliegenden Seite der ersten Steigung liegt, wobei eine Neigung der ersten Steigung größer ist als eine Neigung der zweiten Steigung;
wobei der Griffabschnitt eine Trennwand (10k) und eine Trennwand (10l) beinhaltet, eine zwischen der Trennwand (10k) und der Trennwand (10l) angeordnete Druckfeder (10m) zum Vorspannen der Trennwand (10l) nach unten, und den Vorsprung (10p), der an einem distalen Ende der Trennwand (10l) ausgebildet ist; wobei der Griffabschnitt konfiguriert ist, um den Vorsprung (10p) nach oben zu drücken, indem er die Trennwand (10k) und die Trennwand (10l) von der Ober- und Unterseite greift und die Trennwand (10l) in Richtung der Trennwand (10k) drückt, um das Eingreifen des Vorsprungs in den Eingriffsabschnitt (10h, 10h') aufzuheben, und um zu ermöglichen, dass der Ständerbewegungs-Verhinderungsmechanismus (10c, 10c', 10c', 10c") bewegt wird;
wobei der Ständerbewegungs-Verhinderungsmechanismus (10c, 10c', 10c") ferner eine Welle (10n) beinhaltet, die vom Griffabschnitt getragen wird und sich bis zu einem unteren Abschnitt der Führungsschiene (10e, 10e') erstreckt, wobei die Führungsschiene (10e, 10e') einen Furchenabschnitt (*trench section*) beinhaltet, durch den die Welle (10n) bei Bewegung des Ständerbewegungs-Verhinderungsmechanismus (10c) hindurchgeht.

2. Das Ständergestell (10, 10A, 10B, 10C) nach Anspruch 1, **gekennzeichnet durch** das Umfassen von Greifelementen (10d) auf zwei gegenüberliegenden Seiten, parallel zu einer Anordnungsrichtung der auf der Gestellbasis (10a) gelagerten Ständer (9).

3. Das Ständergestell (10C) nach Anspruch 1 oder 2, **dadurch gekennzeichnet, dass** die Gestellbasis (10a') auf drei Seiten mit Ausnahme der Öffnung in Ständerfahrtrichtung Führungswände (10f) aufweist, und dass die Führungswand (10f) aus einer von zwei parallel zur Fahrtrichtung verlaufenden Seiten einen auf einer Seitenfläche davon ausgebildeten Montageabschnitt (10x) zur Befestigung mit einem Vorsprungabschnitt (9x) der Ständer (9A) aufweist.

4. Ein Ständergestell (10, 10A, 10B, 10C), das konfiguriert ist, um eine Vielzahl von Ständern (9) aufzunehmen, die eine Vielzahl von Probenbehältern (9a) tragen, das Folgendes umfasst:
eine Gestellbasis (10a'), die konfiguriert ist, um die Vielzahl von Ständern (9) aufzunehmen, und die ein Substrat (10g) aufweist, das konfiguriert ist, um die Vielzahl von Ständern (9) zu tragen;
einen Mechanismus zur Verhinderung des Herausfallens von Ständern (10b), der konfiguriert ist, um zu verhindern, dass die Ständer herausfallen, wenn die Ständer auf der Gestellbasis (10a') abgelegt sind;
wobei der Mechanismus zur Verhinderung des Herausfallens von Ständern (10b) einen Hebel zur Verhinderung des Herausfallens (10s) umfasst, der in einem Treppenmuster ausgebildet ist, das sich horizontal unter dem Substrat (10g) erstreckt und der ausgehend von einem in der Nähe der Öffnung ausgebildeten Loch (10w) gebogen ist, und der vertikal nach oben steigt, um zu verhindern, dass der Ständer (9) herausfällt;
wobei der Hebel zur Verhinderung des Herausfallens (10s) ferner vom Substrat (10g) der Gestellbasis (10a) mit einer Welle (10q) getragen wird, wobei eine Feder (10r) zwischen die Unterseite des Substrats (10g) und den Hebel zur Verhinderung des Herausfallens (10s) gesetzt wird, die konfiguriert ist, um einen Endabschnitt des Hebels zur Verhinderung des Herausfallens (10s), der aus dem Loch (10w) aufsteigt, nach oben vorzuspannen;
wobei das Ständergestell (10, 10A, 10B, 10C) **dadurch gekennzeichnet ist, dass** es ferner Folgendes umfasst:
einen Ständerbewegungs-Verhinderungsmechanismus (10c, 10c', 10c"), der einen Griffabschnitt umfasst, der konfiguriert ist, um auf der Gestellbasis (10a') bewegt zu werden, um die Vielzahl von Ständern (9), die auf der Gestellbasis (10a) angeordnet sind, an eine Seite des Mechanismus zur Verhinderung des Herausfallens von Ständern (10b) zu drücken, um eine Bewegung der Vielzahl von Ständern zu verhindern; und
wobei der Griffabschnitt eine Trennwand (10k') und eine Trennwand (10l) beinhaltet; wobei die Trennwand (10k') an ihrem distalen Ende einen Vorsprung (60) beinhaltet, sodass die Trennwand (10k') von einer Gestellbasis (10a') getragen wird, und wobei der Vorsprung (60) mit einem auf der Gestellbasis (10a') ausgebildeten Eingriffsabschnitt (61) in Eingriff steht;
eine Führungsschiene (10e') mit einer Vielzahl von Eingriffsabschnitten (10h, 10h') an Positionen, die der Anzahl der gehaltenen Ständern (9) entsprechen, wobei der Vorsprung (60) konfiguriert ist, um mit einem Eingriffsabschnitt (10h, 10h') in Eingriff zu kommen, um die Bewegung des Ständers (9) zu verriegeln;
wobei jeder Eingriffsabschnitt (10h, 10h') ein Vorsprung ist, der auf der Führungsschiene (10e, 10e') ausgebildet ist, wobei der Vorsprung erste und zweite Steigungen umfasst, wobei die erste Steigung der Ständergestellöffnung zugewandt ist und die zweite Steigung auf der gegenüberliegenden Seite des Vorsprungs ausgehend von der ersten Steigung liegt, wobei eine Neigung der ersten Steigung größer ist als eine Neigung der zweiten Steigung;
wobei die Führungsschiene (10e, 10e') unabhängig von der Gestellbasis (10a) ausgebildet ist, mit der Gestellbasis (10a) verbunden ist durch Verbindungsabschnitte (31) an den Rändern von zwei achsensymmetrischen Verbindungselementen (30), wobei jedes Verbindungselement (30) um eine Welle (32) drehbar ist, die entlang ihrer jeweiligen Symmetrieachse angeordnet ist, wobei jede Welle (32) auf der Gestellbasis (10a') gelagert ist und als Verbindungsabschnitt zwischen dem jeweiligen Verbindungselement (30) und der Gestellbasis (10a') dient, und wobei eine Feder (33), die konfiguriert ist, um vorzuspannen, um die Führungsschiene (10e') nach oben zu drücken, wobei die Feder (33) angeordnet ist zwischen dem Verbindungselement (30) und der Führungsschiene (10e'), wobei die beiden achsensymmetrischen Verbindungselemente (30) konfiguriert sind, um an ihren Kanten, gegenüber den Kanten, die die Verbindungsabschnitte tragen, nach oben geschoben zu werden, um es zu ermöglichen, den Eingriff des Vorsprungs in den Eingriffsabschnitt (10h, 10h') aufzuheben, und den Ständerbewegungs-Verhinderungsmechanismus (10c, 10c', 10c") zu bewegen.

5. Das Ständergestell (10, 10A, 10B, 10C) nach irgendeinem der Ansprüche von 1 bis 4, **dadurch gekennzeichnet, dass** das Griffelement (10d), das auf der Öffnungsseite des Ständers (9) in Fahrtrichtung angeordnet ist, so angeordnet ist, dass der Halteabschnitt (4a) bezüglich einer Anordnungsposition des Griffelements (10d) versetzt ist.

6. Ein Ständer-Transportsystem (8, 8'), das Folgendes umfasst:
einen Ständergestell-Einstellabschnitt (8A), der für ein darauf aufzusetzendes Ständergestell (10, 10A, 10B, 10C) konfiguriert ist, wobei das Ständergestell (10, 10A, 10B, 10C) ein Ständergestell nach irgendeinem der Ansprüche von 1 bis 5 ist, das konfiguriert ist, um die Vielzahl von Ständern (9) aufzunehmen, die eine Vielzahl von Probenbehältern (9a) tragen;
einen Ständer-Sammelabschnitt (8C), der für ein darauf aufzustellendes leeres Ständergestell (10, 10A, 10B, 10C) konfiguriert ist, wobei das leere Ständergestell (10, 10A, 10B, 10C) ein Ständergestell nach irgendeinem der Ansprüche von 1 bis 5 ist, das konfiguriert ist, um einen Ständer (9) zu sammeln, das eine Vielzahl von Probenbehältern (9a) trägt, die angesaugt werden; und
einen Transportmechanismus (8B), der konfiguriert ist, um den Ständer (9) von dem Ständergestell-Einstellabschnitt (8A) zu einem Ansaugmechanismus zu transportieren, Proben aus allen Probenbehältern zu entnehmen und danach den Ständer (9) zum Ständer-Sammelabschnitt (8C) zu transportieren; wobei der Ständer-Sammelabschnitt (8C) einen Verriegelungs-Aufhebungsmechanismus eines Ständerbewegungs-Verhinderungsmechanismus (10c, 10c', 10c") des Ständergestells (10, 10A, 10B, 10C) beinhaltet; wobei der Verriegelungs-Aufhebungsmechanismus ein Heraufschiebeelement ist, das konfiguriert ist, um eine Welle (10n) des Ständergestells (10) nach oben zu schieben.

7. Das Ständer-Transportsystem (8, 8') nach Anspruch 6, **dadurch gekennzeichnet, dass** der Verriegelungs-Aufhebungsmechanismus ein Heraufschiebeelement (10t') ist, das konfiguriert ist, um ein Verbindungselement (30) des Ständergestells (10C) so nach oben zu schieben, dass die Führungsschiene (10e') des Ständergestells (10C) nach unten geschoben wird.

8. Das Ständer-Transportsystem (8, 8') nach irgendeinem der Ansprüche 6 oder 7, **dadurch gekennzeichnet, dass** der Ständergestell-Einstellabschnitt (8A) und der Ständer-Sammelabschnitt (8C) einen Verriegelungs-Aufhebungsmechanismus (10u) eines Mechanismus zur Verhinderung des Herausfallens von Ständern (10b) des Ständergestells (10) beinhalten.

## Revendications

1. Un plateau à portoirs (10, 10A, 10B, 10C) configuré pour contenir une pluralité de portoirs (9) supportant une pluralité de conteneurs à échantillons (9a), comprenant :
une base de plateau (10a) configurée pour stocker la pluralité de portoirs (9) et présentant un substrat (10g) qui est configuré pour supporter la pluralité de portoirs (9) ;
un mécanisme de prévention de chute de portoir (10b) configuré pour empêcher les portoirs (9) de tomber lorsque les portoirs (9) sont stockés sur la base de plateau (10a) ;
le mécanisme de prévention de chute de portoir (10b) comprenant un levier de prévention de chute (10s), qui est formé selon un motif d'escalier s'étendant horizontalement sous le substrat (10g) et qui est plié à partir d'un trou (10w) formé près de l'ouverture et monte verticalement pour éviter que le portoir (9) tombe ; le levier de prévention de chute (10s) étant en outre supporté par le substrat (10g) de la base de plateau (10a) avec un arbre (10q), sachant qu'un ressort (10r) est placé entre la surface inférieure du substrat (10g) et le levier de prévention de chute (10s) configuré pour solliciter vers le haut une section d'extrémité du levier de prévention de chute (10s) montant depuis le trou (10w) ;
le plateau à portoirs (10, 10A, 10B, 10C) **étant caractérisé en ce qu'il** comprend en outre :
un mécanisme empêchant un déplacement de portoir (10c, 10c', 10c") comprenant une section de poignée configurée pour être déplacée sur la base de plateau (10a) pour presser la pluralité de portoirs (9) disposée sur la base de plateau (10a) vers un côté du mécanisme de prévention de chute de portoir (10b) afin d'empêcher le déplacement de la pluralité de portoirs (9) ; et
un rail de guidage (10e, 10e') présentant une pluralité de sections d'engagement (10h, 10h') à des positions correspondant au nombre de portoirs (9) maintenus, le rail de guidage (10e, 10e') étant intégré dans la base de plateau (10a), sachant qu'une saillie (10p) servant de section de verrouillage (10p) maintenue par le mécanisme empêchant un déplacement de portoir (10c, 10c', 10c") est configuré pour être engagé avec une section d'engagement (10h, 10h') afin de bloquer le mouvement des portoirs (9) ;
chaque section d'engagement (10h, 10h') étant une saillie formée sur le rail de guidage (10e, 10e'), la saillie comprenant des pentes première et deuxième, la première pente faisant face à l'ouverture du plateau à portoirs, la deuxième pente étant du côté opposé de la première pente, sachant qu'une inclinaison de la première pente est supérieure à une inclinaison de la deuxième pente ;
la section de poignée incluant une cloison (10k) et une cloison (10l), un ressort de poussée (10m) agencé entre la cloison (10k) et la cloison (10l) pour solliciter la cloison (10l) vers le bas, et la saillie (10p) étant formée à une extrémité distale de la cloison (10l) ; la section de poignée étant configurée pour pousser la saillie (10p) vers le haut en saisissant la cloison (10k) et la cloison (10l) par les côtés supérieur et inférieur et en poussant la cloison (10l) vers la cloison (10k) afin d'annuler l'engagement de la saillie avec une section d'engagement (10h, 10h'), et de permettre le déplacement du mécanisme empêchant un déplacement de portoir (10c, 10c', 10c") ;
le mécanisme empêchant un déplacement de portoir (10c, 10c', 10c") incluant en outre un arbre (10n) supporté par la section de poignée et s'étendant vers une section inférieure du rail de guidage (10e, 10e'), le rail de guidage (10e, 10e') incluant une section en rainure à travers laquelle passe l'arbre (10n) avec un mouvement du mécanisme empêchant un déplacement de portoir (10c).

2. Le plateau à portoirs (10, 10A, 10B, 10C) d'après la revendication 1, **caractérisé en ce qu'**il comprend sur deux côtés opposés des éléments de préhension (10d) parallèles à une direction d'agencement des portoirs (9) stockés sur la base de plateau (10a).

3. Le plateau à portoirs (10C) d'après la revendication 1 ou 2, **caractérisé en ce que** la base de plateau (10a') inclut des parois de guidage (10f) sur trois côtés à l'exception de l'ouverture dans le sens de déplacement de portoir, et que la paroi de guidage (10f) d'un des deux côtés parallèles à ce sens de déplacement présente une section d'ajustement (10x) formée sur une surface latérale pour un ajustage par rapport à une section de saillie (9x) des portoirs (9A).

4. Un plateau à portoirs (10, 10A, 10B, 10C) configuré pour contenir une pluralité de portoirs (9) supportant une pluralité de conteneurs à échantillons (9a), comprenant :
une base de plateau (10a') configurée pour stocker la pluralité de portoirs (9) et présentant un substrat (10g) qui est configuré pour supporter la pluralité de portoirs (9) ;
un mécanisme de prévention de chute de portoir (10b) configuré pour empêcher les portoirs de tomber lorsque les portoirs sont stockés sur la base de plateau (10a') ;
le mécanisme de prévention de chute de portoir (10b) comprenant un levier de prévention de chute (10s), qui est formé selon un motif d'escalier s'étendant horizontalement sous le substrat (10g) et qui est plié à partir d'un trou (10w) formé près de l'ouverture et monte verticalement pour éviter que le portoir (9) tombe ;
le levier de prévention de chute (10s) étant en outre supporté par le substrat (10g) de la base de plateau (10a) avec un arbre (10q), sachant qu'un ressort (10r) est placé entre la surface inférieure du substrat (10g) et le levier de prévention de chute (10s) configuré pour solliciter vers le haut une section d'extrémité du levier de prévention de chute (10s) montant depuis le trou (10w) ;
le plateau à portoirs (10, 10A, 10B, 10C) **étant caractérisé en ce qu'**il comprend en outre :
un mécanisme empêchant un déplacement de portoir (10c, 10c', 10c") comprenant une section de poignée configurée pour être déplacée sur la base de plateau (10a) pour presser la pluralité de portoirs (9) disposée sur la base de plateau (10a) vers un côté du mécanisme de prévention de chute de portoir (10b) afin d'empêcher le déplacement de la pluralité de portoirs (9) ; et
la section de poignée incluant une cloison (10k') et une cloison (10l) ; sachant que la cloison (10k') inclut une saillie (60) à son extrémité distale de manière que la cloison (10k') soit supportée par une base de plateau (10a') et sachant que la saillie (60) est engagée avec une section d'engagement (61) formée sur la base de plateau (10a') ;
un rail de guidage (10e') présentant une pluralité de sections d'engagement (10h, 10h') à des positions correspondant au nombre de portoirs (9) maintenus, sachant que la saillie (60) est configurée pour être engagée avec une section d'engagement (10h, 10h') afin de bloquer le mouvement du portoir (9) ;
chaque section d'engagement (10h, 10h') étant une saillie formée sur le rail de guidage (10e, 10e'), la saillie comprenant des pentes première et deuxième, la première pente faisant face à l'ouverture du plateau à portoirs, la deuxième pente étant du côté opposé de la première pente, sachant qu'une inclinaison de la première pente est supérieure à une inclinaison de la deuxième pente ;
le rail de guidage (10e, 10e') étant formé indépendamment de la base de plateau (10a), relié à la base de plateau (10a) par des sections de joint (31) sur les bords de deux éléments de joint axisymétriques (30), chaque élément de joint (30) pouvant tourner autour d'un arbre (32) disposé le long de leur axe de symétrie respectif, chaque arbre (32) reposant sur la base de plateau (10a') et servant de section de joint entre l'élément de joint respectif (30) et la base de plateau (10a'), et un ressort (33) configuré pour solliciter afin de pousser vers le haut le rail de guidage (10e'), le ressort (33) étant disposé entre l'élément de joint (30) et le rail de guidage (10e'), les deux éléments de joint axisymétriques (30) étant configurés pour être poussés vers le haut au niveau de leurs bords opposés aux bords portant les sections de joint pour permettre d'annuler l'engagement de la saillie avec la section d'engagement (10h, 10h') et de permettre au mécanisme empêchant un déplacement de portoir (10c, 10c', 10c") d'être déplacé.

5. Le plateau à portoirs (10, 10A, 10B, 10C) d'après l'une quelconque des revendications de 1 à 4, **caractérisé en ce que** l'élément de préhension (10d) disposé sur le côté d'ouverture du portoir (9) dans la direction de déplacement est disposé de telle manière que la section de maintien (4a) est décalée depuis une position de disposition de l'élément de préhension (10d).

6. Un système de transport de portoirs (8, 8') comprenant :
une section de placement de plateau à portoirs (*rack tray set section*) (8A) configurée pour un plateau à portoirs (10, 10A, 10B, 10C) à placer sur celle-ci, le plateau à portoirs (10, 10A, 10B, 10C) étant un plateau à portoirs d'après l'une quelconque des revendications de 1 à 5, configuré pour supporter la pluralité de portoirs (9) supportant une pluralité de conteneurs à spécimen (9a) ;
une section de collecte de portoirs (8C) configurée pour un plateau à portoirs (10, 10A, 10B, 10C) vide à placer sur celle-ci, le plateau à portoirs (10, 10A, 10B, 10C) vide étant un plateau à portoirs d'après l'une quelconque des revendications de 1 à 5 configuré pour collecter un portoir (9) supportant une pluralité de conteneurs à échantillons (9a) qui sont aspirés ; et
un mécanisme de transport (8B) configuré pour transporter le portoir (9) de la section de placement de plateau à portoirs (8A) à un mécanisme d'aspiration, aspirer des échantillons de tous les conteneurs d'échantillons, et ensuite transporter le portoir (9) vers la section de collecte de portoirs (8C) ;
la section de collecte de portoirs (8C) incluant un mécanisme d'annulation de verrouillage d'un mécanisme empêchant un déplacement de portoir (10c, 10c', 10c") du plateau à portoirs (10, 10A, 10B, 10C) ; le mécanisme d'annulation de verrouillage étant un élément poussoir configuré pour pousser un arbre (10n) du plateau à portoirs (10) vers le haut.

7. Le système de transport de portoirs (8, 8') d'après la revendication 6, **caractérisé en ce que** le mécanisme d'annulation de verrouillage est un élément poussoir (10t') configuré pour pousser vers le haut un élément de joint (30) du plateau à portoirs (10C) de manière que le guidage (10e') du plateau à portoirs (10C) soit poussé vers le bas.

8. Le système de transport de portoirs (8, 8') d'après l'une quelconque des revendications 6 ou 7, **caractérisé en ce que** la section de placement de plateau à portoirs (8A) et la section de collecte de portoirs (8C) incluent un mécanisme d'annulation de verrouillage (10u) d'un mécanisme de prévention de chute de portoir (10b) du plateau à portoirs (10).
